# EUROPÄISCHE PATENTSCHRIFT

(11) **EP 2 291 294 B1**
(45) Veröffentlichungstag und Bekanntmachung des Hinweises auf die Patenterteilung: **05.12.2012**
(21) Anmeldenummer: 09749692.1
(22) Anmeldetag: 20.04.2009
(51) Int. Cl.: F24F 13/075, B60H 1/34

(54) **LUFTDÜSE**
AIR NOZZLE
TUYÈRE À AIR

(30) Priorität: 19.05.2008 DE 202008000059 U
(43) Veröffentlichungstag der Anmeldung: 09.03.2011
(73) Patentinhaber: Dr. Schneider Kunststoffwerke GmbH, 96317 Kronach-Neuses (DE)
(72) Erfinder: UHLENBUSCH, Olaf, 96275 Marktzeuln (DE)
(74) Vertreter: Pröll, Jürgen
(86) Internationale Anmeldenummer: PCT/EP2009/054661
(87) Internationale Veröffentlichungsnummer: WO 2009/141202

(56) Entgegenhaltungen:
- EP-A- 1 826 043
- EP-A- 1 872 988
- DE-B3-102004 013 171
- DE-U1- 20 213 250
- GB-A- 1 319 449
- US-A1- 2007 066 206

## Beschreibung

Die Erfindung betrifft eine Luftdüse zur Führung eines Luftstromes aus einem Luftführungsschacht, wie einer Leitung aus einer Heizungs-, Lüftungs- oder Klimaanlage, insbesondere in Kraftfahrzeugen mit den im Oberbegriff genannten Merkmalen.

Luftdüsen zur Führung eines Luftstromes sind aus vielen technischen Anwendungen bekannt, die standardmäßig in Kraftfahrzeugen eingebaut werden. Wichtig dabei ist, dass der aus den Luftdüsen austretende Luftstrom so gelenkt werden kann, dass er für die Insassen als angenehm empfunden wird. Die Austrittselemente der Luftdüsen müssen also so gestaltet sein, dass die Richtung des austretenden Luftstromes beliebig in seiner Richtung und Stärke einstellbar ist.

In der Technik haben sich Lamellen als Luftleitelemente, die in einer Aufnahme schwenkbar sind, bewährt. Die Lamellen liegen im geöffneten Zustand des Luftaustrittskanals parallel übereinander und im geschlossenen Zustand überlappen sie sich oder fügen sich aneinander. Auch kann in dem Düsengehäuse eine Drosselklappe angeordnet sein.

Aus der US 2007/066206 A1 ist eine Runddüse der gattungsgemäßen Art bekannt, bei der zwei lamellenförmige Luftleitelemente als verstellbare Austrittsverschlusselemente schwenkbar in einem drehbaren Gehäusekäfig mit Stellring gelagert sind. Durch Druck auf das obere Luftleitelement im oberen Randbereich wird diese um die Schwenkachse verschwenkt und aus einer Schließstellung in eine Öffnungsstellung verbracht. Über die Kopplungsstange wird das zweite Luftleitelement in gleicher Weise mit verschwenkt. Die Luftleitelemente überstehen dabei den Stellring vorderseitig. Durch Drehung des Stellringes am Gehäuse kann die Austrittsrichtung verändert werden. In allen Öffnungsstellungen ist ein unschönes Erscheinungsbild durch die den Stellring vorderseitig überstehenden Luftleitelemente gegeben. Außerdem ist eine Verteilung des Luftstromes praktisch nicht möglich.

Aus der EP 1 319 449 sowie aus der inhaltsgleichen DE 20 40 641 A1 ist eine Schwenkdüse, wie sie in Belüftungs - oder Heizungssystemen in Motorfahrzeugen, Schiffs- und Flugzeugkabinen oder in anderen Räumen verwendet wird, mit fixierten Lamellen bekannt. Die Düse ist so gelagert, dass sie verschwenkt und/oder gekippt werden kann, um den sie passierenden Luftstrom in eine gewünschte Richtung ableiten zu können. In der Düse ist ein Klappenventil zum Öffnen und Schließen der Düse und zum Einstellen des durch sie hindurchströmenden Luftstromes vorgesehen. Die Ventilklappen in der Düse sind dabei um ein sich quer durch die Düse erstreckendes Gelenk verschwenkbar gelagert und weisen einen oder mehrere Vorsprünge zum gleitenden Eingriff in einen zur Achse der Düse geneigten Schlitz bzw. Schlitze in der Düsenwandung auf. Die Ventilklappen sind derart mit einem von der Vorderseite der Düse zugänglichen und von Hand um eine mittige Längsachse verdrehbaren Steuerglied verbunden, dass eine Verdrehung des Steuergliedes die Klappen relativ zu dem Schlitz oder den Schlitzen bewegt, die die Vorsprünge zur Betätigung der Klappen führen. Bei Anordnung in einer Runddüse ist dabei vorgesehen, dass in einem verdrehbaren Ring die Lamellen fest angeordnet sind und mittig ein rundes Lager gegeben ist, in welchem das Betätigungselement für die Klappen von hinten hindurchsteckbar ist.

In der DE 103 21 518 A1 wird eine Luftdüse in Form einer Runddüse offenbart, bei der das Gehäuse für den Luftstrom geteilt ist, wobei der hintere Teil des Gehäuses an der Luftzuführung angeschlossen ist und der vordere Teil die Lamellen enthält. Die beiden Gehäuseteile sind gegeneinander verdrehbar, so dass die Lage der Lamellen und damit die Richtung des Luftstromes verändert werden kann.

Eine weitere Lösung dieser Art wird in der DE 10 2004 013 171 B3 offenbart. Die Lamellen sind über eine Kupplungsstange miteinander verbunden, wodurch die Durchtrittsöffnung für die Luft reguliert werden kann und die Lamellen können insgesamt gedreht werden, so dass die Richtung des austretenden Luftstromes verändert werden kann.

Eine besondere Gestaltung der Lamellen ist in der EP 1 826 043 A1 offenbart. In dem Gehäuse für die Luftführung ist mindestens ein Bauteil mit einem Grundkörper vorgesehen, der mit einer wellenförmigen Flächenstruktur quer zur Strömungsrichtung des Luftstromes oder in einem bestimmten Winkel hierzu versehen ist. Diese Form führt zu einer höheren Stabilität der Lamellen, einem optimalen Strömungsverhalten und zu einer verbesserten Schließfunktion.

Bei all diesen Lösungen strömt die Luft immer mit einer bestimmten Stärke in eine vorgewählte Richtung. Die Lamellen erscheinen dabei in einer Optik, die einem anmutenden Design nicht entspricht, da sie in unterschiedlichen Öffnungsweiten und Richtungen sichtbar sind.

Es ist deshalb Aufgabe der vorliegenden Erfindung, ein Verteilungssystem für einen Luftstrom aus einem Luftzuführungsschacht oder einer Leitung aus einer Heizungs-, Lüftungs- oder Klimaanlage, insbesondere eines Kraftfahrzeuges, vorzuschlagen, das eine gleichmäßige Verteilung der Luft erlaubt und das Design der Lüftungsdüse verbessert.

Die Aufgabe wird durch die Merkmale des kennzeichnenden Teils des Patentanspruchs 1 gelöst.

Die Luftdüse zum Leiten eines Luftstromes aus einem Luftzuführungsschacht oder einer Leitung aus einer Heizungs-, Lüftungs- oder Klimaanlage, insbesondere eines Kraftfahrzeuges, wird so gestaltet, dass die Achsen der einzelnen Lamellen in einem Lamellenring drehbar gelagert und mit einer oder zwei seitlichen Kopplungsstangen miteinander bewegungsgekoppelt sind, wobei die mittlere Lamelle als Steuerlamelle ausgebildet ist und ein Betätigungselement für die Verstellung der Lamellen besitzt. Der Lamellenring ist mit den Lamellen in einer ringförmigen, mit einer Ringführung ausgerüsteten Aufnahme angeordnet, die in die Luftaustrittsöffnung des Gehäuses eingesetzt ist, und mit einem in der Ringführung drehbar gelagerten Verstellring gekoppelt, der an seinem äußeren Umfang Bedienelemente zum Drehen des Lamellenringes besitzt.

In der Öffnung des Verstellringes ist eine Abdeckmaske mit einem zentralen Durchbruch vorhanden, durch den das Betätigungselement für die Lamellen zugänglich ist oder aus dem das Betätigungselement bedienbar hervorsteht. Wenn das Betätigungselement innen hohl ausgeführt ist, kann die Kopplungsstange innen auf die Schwenkachse z.B. mit einem Rastdrehlager aufgeklippt werden. Die Kopplungsstange kann auch seitlich am Betätigungselement auf der Schwenkachse gelagert sein. Zur Mitkopplung der weiteren Lamellen sind an der Kopplungsstange aufklippbare Lagerschalen vorgesehen, die auf freigelegte Achsenabschnitte aufgerastet sind. Diese können auch seitlich versetzt vorgesehen sein. Entsprechend muss die Kopplungsstange ausgebildet sein.

Das Betätigungselement für die Lamellen kann vorzugsweise kugel- oder walzenförmig ausgebildet sein und aus dem zentralen Durchbruch der Abdeckmaske herausragen, so dass es leicht mit einem Finger betätigt werden kann. Um die Drehposition der Lamellen zu erkennen, können auf dem kugelförmigen Betätigungselement Markierungen vorhanden sein, z.B. Striche, die parallel zu den Lamellen liegen. Wird ein walzenförmiges Betätigungselement verwendet, zeigt die Stellung der Walze auch die Lage der Lamellen an.

Die Bedienelemente am Verstellring können Noppen darstellen oder aus einem Rändelring am Umfang des Verstellringes aus einem oder mehreren Stiften oder Haken bestehen.

Die Abdeckmaske kann vorzugsweise eine Luftverteilungsplatte darstellen, um den direkten Luftstrom zu verteilen. Es ist auch möglich, die Abdeckplatten nach Bedarf schnell auszuwechseln. Es ist auch möglich, Filter- oder Duftplättchen einzusetzen.

Auf die Abdeckmaske oder anstelle einer solchen kann auch ein Designring oder Zerstäuberring aufgesetzt sein, der auch die Abdeckmasken hält und zum Auswechseln freigibt.

Ein wichtiger Vorteil der Erfindung entsteht dadurch, dass die Lamellenverstellung durch die Abdeckmaske verdeckt und von außen nicht mehr sichtbar ist. Ein weiterer Vorteil der vorliegenden Erfindung besteht darin, dass der Luftstrom durch die Abdeckmaske und/oder dem Zerstäuberring verteilt wird, d.h. die direkte Wirkung des Luftstromes wird durch die Abdeckmasken verwirbelt, wodurch ein diffuser Luftstrom entsteht.

Filtereinsätze oder Einsätze mit Duftstoffen direkt an der Abdeckmaske oder dem Zerstäuberring können eine Verbesserung der Luftversorgung bewirken.

Die Erfindung soll nachfolgend an einem Ausführungsbeispiel erläutert werden. Gleiche Bezugszahlen bedeuten in den einzelnen Zeichnungen gleiche oder ähnliche Teile.
- Fig. 1: zeigt eine Luftdüse entsprechend der vorliegenden Erfindung,
- Fig. 2: zeigt einen Querschnitt durch die Luftdüse entsprechend der vorliegenden Erfindung mit geschlossenen Lamellen,
- Fig. 3: zeigt einen Querschnitt durch die Luftdüse entsprechend der vorliegenden Erfindung mit geöffneten Lamellen,
- Fig. 4 bis 8: zeigen die einzelnen Teile der Luftdüse gemäß Fig. 1, wie sie ineinandergesetzt sind, und
- Fig. 9. bis 11: zeigen verschiedene Abdeckmasken.

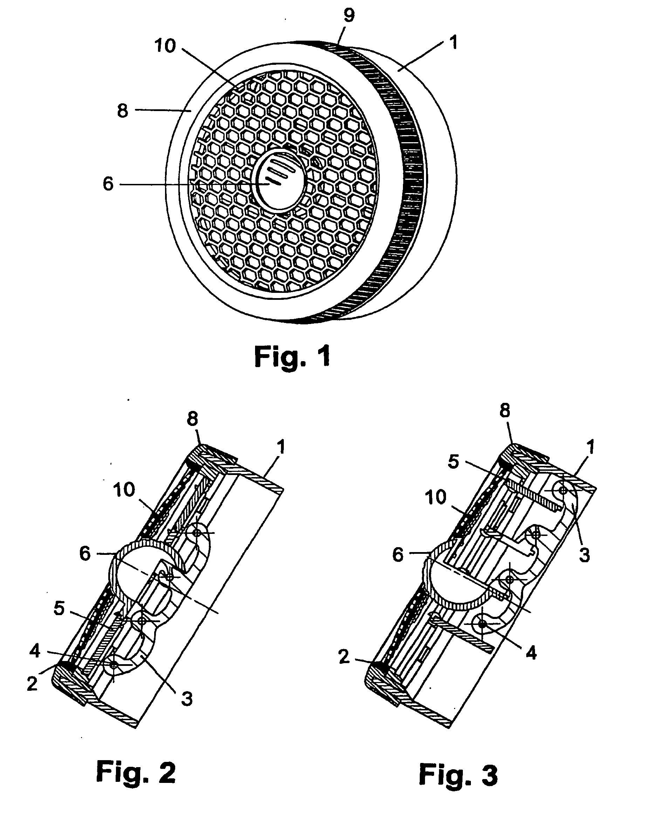

In Fig. 1 ist eine Luftdüse zum Leiten eines Luftstromes aus einem Luftzuführungsschacht oder einer Leitung aus einer Heizungs-, Lüftungs- oder Klimaanlage, insbesondere eines Kraftfahrzeuges, entsprechend der vorliegenden Erfindung dargestellt. Die Luftdüse befindet sich in der Luftaustrittsöffnung in einem in einem Wanddurchbruch eingesetzten Gehäuse, das einen rückseitigen Anschluss für den Luftzuführungsschacht und eine vorderseitige Luftaustrittsöffnung besitzt. In der Luftaustrittsöffnung sind Luftleitelemente mit über eine Kopplungsstange 3 verstellbaren Lamellen 5 vorhanden. Die Achsen 4 der einzelnen Lamellen 5 sind in einem Lamellenring 2 mit einer mittigen Kopplungsstange 3 angeordnet. Es können auch zwei seitliche Kopplungsstangen 3 vorhanden sein. Die mittlere Lamelle 5 ist als Steuerlamelle ausgebildet und besitzt ein Betätigungselement 6 für die Verstellung der Lamellen 5. Der Lamellenring 2 mit den Lamellen 5 ist in einer ringförmigen, mit einer Ringführung 7 ausgerüsteten Aufnahme 1 in die Luftaustrittsöffnung eingesetzt und mit einem in der Ringführung 7 drehbar gelagerten Verstellring 8 gekoppelt, der an seinem äußeren Umfang Bedienelemente 9 zum Drehen des Lamellenringes 2 besitzt. In der Öffnung des Verstellringes 8 ist eine Abdeckmaske 10 mit einem zentralen Durchbruch vorhanden, durch den das Betätigungselement 6 für die Lamellen 5 zugänglich ist. Das Betätigungselement 6 für die Lamellen 5 ist im Ausführungsbeispiel kugelförmig ausgebildet und trägt eine Markierung, die die Drehstellung der Lamellen 5 gegenüber dem umlaufenden Ring in einem Abdeckelement anzeigt, in welchem Ring das Betätigungselement eingreift.

Fig. 2 und Fig. 3 zeigen jeweils einen Querschnitt durch die Luftdüse, wobei in Fig. 2 die Lamellen 5 geschlossen sind und in Fig. 3 geöffnet. Das kugelförmige Betätigungselement 6 für die Lamellen 5, das einfach mit einem Finger nach innen gedreht werden kann, drückt gegen die Steuerlamelle und öffnet oder schließt die Lamellen 5.

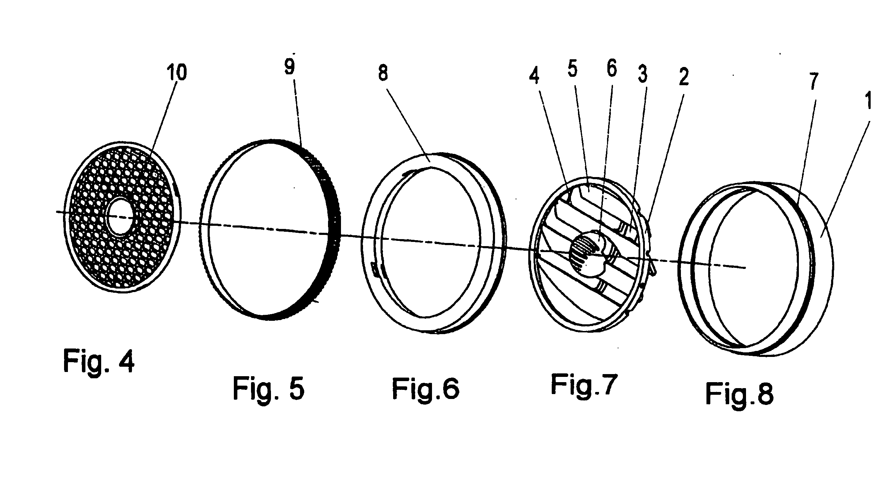

In den Fig. 4 bis Fig. 8 sind die einzelnen Teile der Luftdüse dargestellt, wie sie bei der Montage ineinander gefügt werden. In Fig. 8 ist die Aufnahme 1 dargestellt. In diese wird der Lamellenring 2 mit den Lamellen 5 und dem Betätigungselement 6 für die Lamellen 5 eingesetzt. Danach folgt der Verstellring 8 gemäß Fig. 6. Auf den Verstellring 8 wird das Bedienelement 9 gemäß Fig. 5 aufgesetzt, das in diesem Ausführungsbeispiel ein Rändelring darstellt. In die Öffnung des Verstellrings 8 wird die Abdeckmaske 10 eingesetzt. Aus dem mittleren Durchbruch der Abdeckmaske 10 ragt im montierten Zustand das Betätigungselement 6 für die Lamellen 5. In dieser Darstellung handelt es sich um ein kugelförmiges Betätigungselement 6 mit Markierungen in Form von Strichen.

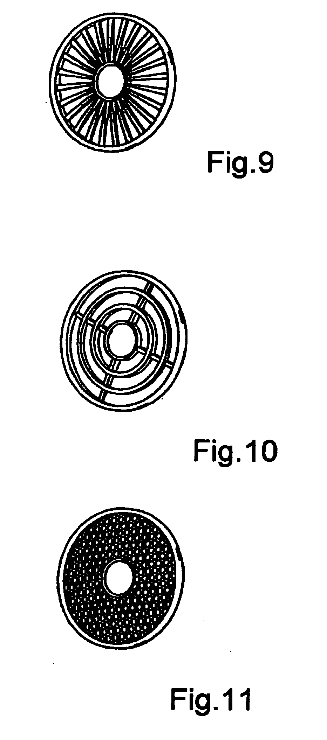

Die Fig. 9 bis Fig. 11 zeigen einige Ausführungsformen der Abdeckmasken 10, über die unterschiedliche Luftverwirbelungen erreichbar sind. Fig. 9 zeigt eine strahlenförmige Abdeckmaske 10, Fig. 10 eine ringförmige Abdeckmaske 10 und Fig. 11 eine Lochmaske 10.

Die Lochmaske 10 entsprechend Fig. 11 zeigt eine besonders gute Luftverwirbelung. Es sind weitere Abdeckmasken denkbar, die zu einer angenehmen Belüftung führen.

## Patentansprüche

1. Luftdüse zum Leiten eines Luftstromes aus einem Luftzuführungsschacht oder einer Leitung aus einer Heizungs-, Lüftungs- oder Klimaanlage, insbesondere in einem Kraftfahrzeug, mit einem in oder hinter einem Wanddurchbruch eingesetzten Gehäuse, das einen rückseitigen Anschluss für den Luftzuführungsschacht und eine vorderseitige Luftaustrittsöffnung besitzt, wobei in der Luftaustrittsöffnung Luftleitelemente mit über eine oder zwei seitlich angeordnete Kopplungsstangen beim Verschwenken einer Lamelle (5) verstellbaren Lamellen (5) vorhanden sind, deren Achsen (4) in einem Lamellenring (2) angeordnet sind, der mit den Lamellen (5) in einer ringförmigen mit einer Ringführung (7) ausgerüsteten Aufnahme (1) in die Luftaustrittsöffnung eingesetzt ist, wobei die mittlere Lamelle (5) als Steuerlamelle ausgebildet ist und ein Betätigungselement (6) für die Verstellung der Lamellen (5) besitzt, **dadurch gekennzeichnet, dass** der Lamellenring (2) mit einem in der Ringführung (7) drehbar gelagerten Verstellring (8) gekoppelt ist, der an seinem äußeren Umfang Bedienelemente (9) zum Drehen des Lamellenringes (2) besitzt, und dass in der Öffnung des Verstellringes (8) eine Abdeckmaske (10) mit einem zentralen Durchbruch vorhanden ist, durch den das Betätigungselement (6) für die Lamellen (5) zugänglich ist oder aus dem das Betätigungselement bedienbar hervorsteht.

2. Luftdüse nach Anspruch 1, **dadurch gekennzeichnet , dass** das Betätigungselement (6) für die Lamellen (5) kugel- oder walzenförmig ist und Markierungen zur Erkennung der Drehposition der Lamellen (5) besitzt.

3. Luftdüse nach Anspruch 2, **dadurch gekennzeichnet , dass** die Markierungen Striche darstellen, die parallel zu den Lamellen (5) verlaufen.

4. Luftdüse nach Anspruch 1 bis 3, **dadurch gekennzeichnet , dass** die Bedienelemente (9) am Verstellring (8) aus Noppen oder einem Rändelring am Umfang des Verstellringes (8) oder einem Stift oder Haken bestehen.

5. Luftdüse nach Anspruch 1 bis 4, **dadurch gekennzeichnet , dass** die Abdeckmaske (10) eine Luftverteilungsplatte darstellt.

6. Luftdüse nach Anspruch 1 bis 4, **dadurch gekennzeichnet, dass** die Abdeckmaske (10) einen Filter darstellt.

7. Luftdüse nach Anspruch 6, **dadurch gekennzeichnet, dass** auf die Abdeckmaske (10) ein Designring oder Zerstäuberring aufgesetzt ist.

8. Luftdüse nach einem der Ansprüche 5 oder 7, **dadurch gekennzeichnet, dass** die Abdeckmasken (10) oder der Designring oder Zerstäuberring auswechselbar sind.

## Claims

1. Air nozzle for conducting an air flow from an air feed shaft or a duct from a heating, ventilating or air-conditioning installation, particularly in a motor vehicle, with a housing, which is inserted in or behind a wall passage and which has a connection at the rear side for the air feed shaft and an air outlet opening at the front side, wherein present in the air outlet opening are air guide elements with blades (5), which are adjustable by way of one or two laterally arranged coupling rods on pivotation of one blade (5) and the axles (4) of which are arranged in a blade ring (2), which together with the blades (5) is inserted in an annular mount (1), which is equipped with an annular guide (7), into the air outlet opening, wherein the middle blade (5) is constructed as a control blade and has an actuating element (6) for adjusting the blades (5), **characterised in that** the blade ring (2) is coupled with an adjusting ring (8), which is rotatably mounted in the annular guide (7) and which has at its outer circumference control elements (9) for turning the blade ring (2), and that a cover mask (10) with a central passage, through which the actuating element (6) for the blades (5) is accessible or from which the actuating element protrudes to be operable, is present in the opening of the adjusting ring (8).

2. Air nozzle according to claim 1, **characterised in that** the actuating element (6) for the blades (5) is ball-shaped or roller-shaped and has markings for recognition of the rotational position of the blades (5).

3. Air nozzle according to claim 2, **characterised in that** the markings represent dashes extending parallel to the blades (5).

4. Air nozzle according to claim 1 to 3, **characterised in that** the control elements (9) at the adjusting ring (8) consist of nubs or a knurled ring at the circumference of the adjusting ring (8) or a pin or hook.

5. Air nozzle according to claim 1 to 4, **characterised in that** the cover mask (10) represents an air distributor plate.

6. Air nozzle according to claim 1 to 4, **characterised in that** the cover mask (10) represents a filter.

7. Air nozzle according to claim 6, **characterised in that** a design ring or atomiser ring is placed on the cover mask (10).

8. Air nozzle according to one of claims 5 and 7, **characterised in that** the cover mask (10) or design ring or atomiser ring is exchangeable.

## Revendications

1. Buse à air pour diriger un flux d'air à partir d'un compartiment d'alimentation en air ou d'une canalisation d'une installation de chauffage, de ventilation ou de climatisation, notamment dans un véhicule à moteur, avec un boîtier inséré dans ou derrière une percée murale, qui possède un raccord arrière pour le compartiment d'alimentation en air et une ouverture avant de sortie de l'air, l'ouverture de sortie de l'air possédant des éléments de guidage de l'air avec des lamelles (5) réglables par une ou deux barres de couplages latérales lors du basculement d'une lamelle (5), les axes des lamelles (4) étant situés dans un anneau de lamelles (2) qui est inséré dans l'ouverture de sortie de l'air avec les lamelles (5) dans un logement (1) en forme d'anneau équipé d'un guidage d'anneau (7), la lamelle médiane (5) étant formée comme une lamelle de commande et possédant un élément d'actionnement (6) pour régler les lamelles (5), l'anneau de lamelles (2) étant couplé avec un anneau de réglage (8) qui possède un roulement rotatif dans le guidage d'anneau (7) et sur son côté extérieur des éléments de commande (9) pour faire tourner l'anneau de lamelles (2), un masque de couverture (10) étant présent dans l'ouverture de l'anneau de réglage (8) avec une percée centrale par laquelle l'élément d'actionnement (6) est accessible pour les lamelles (5) et à partir de laquelle l'élément de commande est situé en saillie pour être actionné.

2. Buse à air selon la revendication 1 caractérisée en cela que l'élément d'actionnement (6) pour les lamelles (5) est en forme de billes ou de rouleaux et possède des marques de reconnaissance de la position rotative des lamelles (5).

3. Buse à air selon la revendication 2 caractérisée en cela que les marques constituent des traits qui passent en parallèle des lamelles (5).

4. Buse à air selon les revendications 1 à 3 caractérisée en cela que les éléments de commande (9) sur l'anneau de réglage (8) sont constitués de noppes ou d'une roue moletée sur le périmètre de l'anneau de réglage (8) ou d'une tige ou d'un crochet.

5. Buse à air selon les revendications 1 à 4 caractérisée en cela que le masque de couverture (10) constitue une plaque de répartition de l'air.

6. Buse à air selon les revendications 1 à 4 caractérisée en cela que le masque de couverture (10) constitue un filtre.

7. Buse à air selon la revendication 6 caractérisée en cela qu'un anneau de design ou un anneau de pulvérisateur est placé sur le masque de couverture (10).

8. Buse à air selon l'une des revendications 5 ou 7 caractérisée en cela que les masques de couverture (10) ou l'anneau de design ou l'anneau de pulvérisateur sont échangeables.
